# EUROPEAN PATENT APPLICATION

(11) **EP 4 723 027 A1**
(43) Date of publication of application: **08.04.2026**
(21) Application number: 24810459.8
(22) Date of filing: 23.05.2024
(51) Int. Cl.: G06T 3/00

(54) **IMAGE STYLIZATION PROCESSING METHOD AND APPARATUS, DEVICE, STORAGE MEDIUM AND PROGRAM PRODUCT**

(30) Priority: 24.05.2023 CN 202310596812
(71) Applicant: Beijing Zitiao Network Technology Co., Ltd., Beijing 100190 (CN)
(72) Inventor: ZHANG, Peng, Beijing 100028 (CN)
(74) Representative: Marks & Clerk LLP
(86) International application number: PCT/CN2024/094930
(87) International publication number: WO 2024/240222

(57) **Abstract**

The present disclosure relates to a method, an apparatus, a device, a storage medium and a program product for image stylization processing. The method comprises: obtaining an original image input by a user; displaying at least one piece of conditional constraint information; in response to an operation on the at least one piece of conditional constraint information, generating a target condition feature based on the conditional constraint information corresponding to the operation; generating a target image based on the target condition feature.

## Description

### CROSS REFERENCE TO RELATED APPLICATIONS

The present disclosure claims a priority right to the Chinese patent application No. 202310596812.6 entitled "Method, Apparatus, Device, Storage Medium and Program Product for Image Stylization Processing" and filed on May 24, 2023 with China National Intellectual Property Administration, the entire disclosure of which is hereby incorporated by reference in its entirety.

### FIELD

The present disclosure relates to the field of image processing technologies, and particularly to a method, an apparatus, a device, a storage medium and a program product for image stylization processing.

### BACKGROUND

As image processing technologies develop constantly, an image style conversion function has become a new interesting function in the field of image application. Specifically, image style conversion refers to converting an image from one style into another style.

In the relevant art, a user may convert an image input by him into an image in a target style through a stylization model. However, one stylization model usually can only generate images in one style, and the user cannot control the styled images generated by the stylization model, so that the styled images are of low quality, cannot satisfy the user's demands and cause poor user experience.

### \SUMMARY

In order to solve the above technical problems, embodiments of the present disclosure provide a method, an apparatus, a device, a storage medium and a program product for image stylization processing, to improve the quality of the styled images, meet the user's demands and improve the user's experience in use.

In a first aspect, embodiments of the present disclosure provide an image stylization processing method, including:
obtaining an original image input by a user;
displaying at least one piece of conditional constraint information;
in response to an operation on the at least one piece of conditional constraint information, generating a target condition feature based on the conditional constraint information corresponding to the operation;
generating a target image based on the target condition feature.

In a second aspect, embodiments of the present disclosure provide an image stylization processing apparatus, including:
an original image obtaining module configured to obtain an original image input by a user;
a conditional constraint information displaying module configured to display at least one piece of conditional constraint information;
a target condition feature generating module configured to, in response to an operation on the at least one piece of conditional constraint information, generate a target condition feature based on the conditional constraint information corresponding to the operation;
a target image generating module configured to generate a target image based on the target condition feature.

In a third aspect, embodiments of the present disclosure provide an electronic device, including:
one or more processors;
a storage device for storing one or more programs;
the one or more programs, when executed by the one or more processors, cause the one or more processors to implement the image stylization processing method according to any of items of the above first aspect.

In a fourth aspect, embodiments of the present disclosure provide a computer-readable storage medium having stored thereon a computer program which, when executed by a processor, implements the image stylization processing method according to any of items of the above first aspect.

In a fifth aspect, embodiments of the present disclosure provide a computer program product including a computer program or instructions which, when executed by a processor, implements the image stylization processing method according to any of items of the above first aspect.

### BRIEF DESCRIPTION OF THE DRAWINGS

The above and other features, advantages and aspects of embodiments of the present disclosure will become more apparent with reference to the following detailed description when taken in conjunction with the accompanying drawings. Throughout the drawings, the same or like reference numerals denote the same or like elements. It should be appreciated that the drawings are schematic and that parts and elements are not necessarily drawn to scale.
FIG. 1 is a flow chart of an image stylization processing method in an embodiment of the present disclosure;
FIG. 2 is a block diagram of an image stylization process in an embodiment of the present disclosure;
FIG. 3a is a schematic diagram of an original image in an embodiment of the present disclosure;
FIG. 3b is a schematic diagram of a conditionally constrained picture in an embodiment of the present disclosure;
FIG. 3c is a schematic diagram of another conditionally constrained picture in an embodiment of the present disclosure;
FIG. 3d is a schematic diagram of a target image corresponding to constraint condition 1 in an embodiment of the present disclosure;
FIG. 3e is a schematic diagram of a target image corresponding to constraint condition 2 in an embodiment of the present disclosure;
FIG. 3f is a schematic diagram of a corresponding target image when a weight of constraint condition 1 is 0.5 and a weight of constraint condition 2 is 0.5 in an embodiment of the present disclosure;
FIG. 4 is a schematic structural diagram of an image stylization processing apparatus in an embodiment of the present disclosure;
FIG. 5 is a schematic structural diagram of an electronic device according to an embodiment of the present disclosure.

### DETAILED DESCRIPTION OF EMBODIMENTS

Hereinafter, embodiments of the present disclosure will be described in more detail with reference to the accompanying drawings. While certain embodiments of the present disclosure have been illustrated in the accompanying drawings, it is to be understood that the present disclosure may be embodied in various forms and should not be construed as being limited to the embodiments set forth herein; rather, these embodiments are provided to enable the present disclosure to be understood more thoroughly and completely. It should be understood that the drawings and examples of the present disclosure are for illustrative purposes only and are not intended to limit the scope of the present disclosure.

It should be appreciated that steps described in a method embodiment of the present disclosure may be performed in a different order and/or in parallel. In addition, the method embodiment may include additional steps and/or omit performing the steps shown. The scope of the present disclosure is not limited in this regard.

As used herein, the term "include" and variations thereof are open-ended terms, i.e., mean "include, but not limited to". The term "based on" means "based, at least in part, on". The term "one embodiment" means "at least one embodiment"; the term "another embodiment" means "at least one further embodiment"; the term "some embodiments" means "at least some embodiments". Relevant definitions of other terms will be given in the following depictions herein.

It needs to be appreciated that concepts such as "first" and "second" mentioned in the present disclosure are only used to distinguish between different devices, modules, or units and are not intended to limit the order of functions performed by these devices, modules or units or interdependence thereof.

It needs to be appreciated that the modifiers "one" or "a plurality of" mentioned in the present disclosure are intended to be illustrative and not restrictive, and those skilled in the art should understand that such modifiers should be understood as "one or more" unless the context clearly indicates otherwise.

The names of messages or information interacted between a plurality of devices in embodiments of the present disclosure are for illustrative purposes only and are not intended to limit the scope of such messages or information.

Before embodiments of the present disclosure are further described in detail, terms involved in the embodiments of the present disclosure are described, and the terms involved in the embodiments of the present disclosure are subject to the following definitions.

In response to conditions or states upon which the executed operations depend, one or more of the executed operations may be in real time or may have a set delay when the dependent conditions or states are satisfied; in the absence of a specific explanation, there is no limitation in the order of execution of the operations.

It may be appreciated that prior to using the technical solutions disclosed in the embodiments of the present disclosure, a user should be notified of the type, scope of use, use scenario, etc. of personal information involved in the present disclosure and authorization be obtained from the user in an appropriate manner according to relevant laws and regulations.

For example, in response to reception of the user's active request, prompt information is sent to the user to explicitly prompt the user that an operation he requests to perform needs to obtain and use the user's personal information. Accordingly, the user may autonomously select, according to the prompt information, whether to provide the personal information to software or hardware such as an electronic device, an application, a server or a storage medium, which executes the operations of the technical solution of the present disclosure.

As an optional but non-limiting implementation, in response to reception of the user's active request, the prompt message may be sent to the user, for example, in the form of a pop-up window in which the prompt message may be presented in a text. In addition, the pop-up window may further carry a selection control for the user to select "agree" or "disagree" to provide the personal information to the electronic device.

It is to be understood that the above-described processes of notifying and obtaining the user's authorization are merely illustrative and not be construed as limiting the implementations of the present disclosure, and that other ways of satisfying relevant laws and regulations may also be applied to the implementations of the present disclosure.

It may be appreciated that data (including but not limited to the data itself, acquisition or use of data) involved in the technical solution should comply with requirements in relevant laws and regulations and relevant provisions.

As image processing technologies develop constantly, an image style conversion function has become a new interesting function in the field of image application. Specifically, image style conversion refers to converting an image from one style into another style.

In the relevant art, a user may convert an image input by him into an image in a target style through a stylization model. In a specific implementation, a client receives the image input by the user, and inputs the image input by the user into a stylization model, and the stylization model outputs a target style image after performing a style migration process on the image input by the user.

However, one stylization model usually can only generate images in one style. For example, if the stylization model is trained to generate ancient style images in the training process, the stylization model can only generate ancient style images. If the stylization model is trained to generate animated style images in the training process, the stylization model can only generate the animated style images. If the stylization model is trained to generate line drawing style images in the training process, the stylization model can only generate the line drawing style images

Furthermore, once one stylization model is trained successfully, it is put into use. The processing of the input image by the stylization model can only be controlled by its internal network structure, and the generated styled images cannot be controlled externally and manually. In other words, the user cannot control the styled images generated by the stylization model. As a result, the styled images are of low quality, cannot satisfy the user's demands and cause poor user experience.

In order to solve at least one of the above technical problems, in an embodiment of the present disclosure, there is provided an image stylization processing method, including: obtaining an original image input by a user; displaying at least one piece of conditional constraint information; in response to an operation on the at least one piece of conditional constraint information, generating a target condition feature based on the conditional constraint information corresponding to the operation; generating a target image based on the target condition feature.

In an implementation of the present disclosure, by adding the conditional constraint information during the stylization processing of the original image, it is possible to use the conditional constraint information to perform constraint control on the content in the styled images, improve the quality of the styled images, meet the user's demands and improve the user's experience in use.

The image stylization processing method according to an embodiment of the present disclosure will be described in detail with reference to the embodiments and the accompanying drawings.

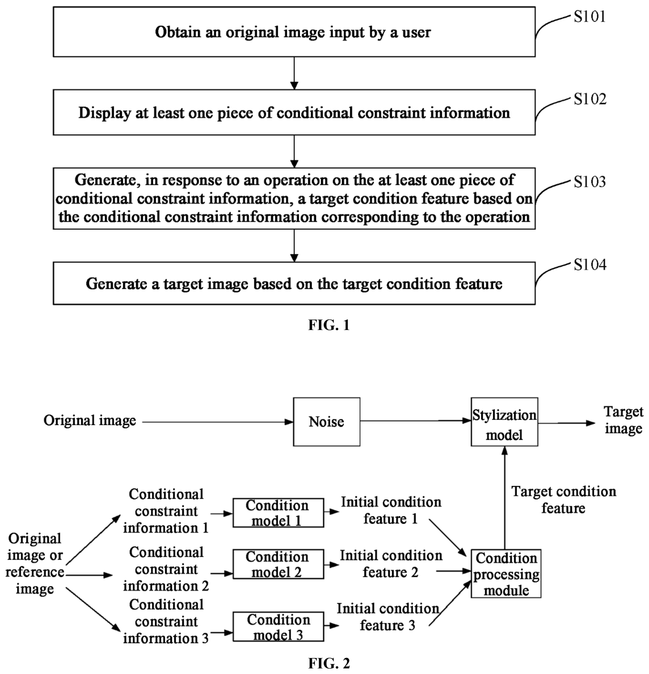

FIG. 1 is a flow chart of an image stylization processing method according to an embodiment of the present disclosure. The embodiment is applicable to a case where stylization processing is performed on an image, the method can be executed by an image stylization processing apparatus, and the image stylization processing apparatus can be implemented using software and/or hardware.

As shown in FIG. 1, the image stylization processing method according to the embodiment of the present disclosure mainly includes steps S101-S104.

S101: An original image input by the user is obtained.

In an implementation of the present disclosure, the original image refers to an image which is input by the user and whose style is to be changed. The original image may be a photo taken by the user, a picture downloaded from the Internet, or a frame extracted from a video.

In a specific implementation scenario, in a video production client, a user may select a style identifier, obtain a stylization model corresponding to the style identifier in response to the selection operation on the style identifier, display an image input control, and obtain the original image input by the user in response to an operation on the image input control.

In a specific implementation scenario, in a video production client, the image input control is displayed, the original image input by the user is obtained in response to an operation on the image input control, and then the style identifier is selected.

S102: At least one piece of conditional constraint information is displayed.

In an embodiment of the present disclosure, the conditional constraint information may refer to a conditionally constrained picture. Specifically, the conditionally constrained picture may be a character posture graph represented by line segments, the character being a human figure in the picture, and the conditionally constrained picture may also be a human figure contour graph constituted by a line drawing. The conditionally constrained picture may also be a keypoint picture including character keypoints and constituted by connecting the keypoints.

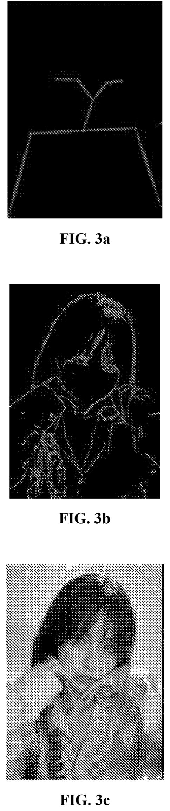

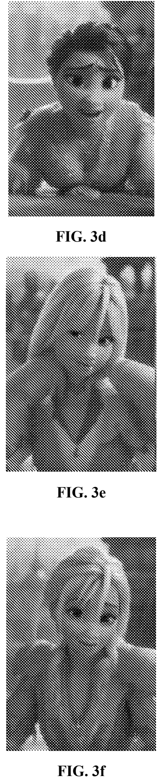

In one embodiment of the present disclosure, as shown in FIG. 3a, the conditionally constrained picture may be a character posture graph represented by line segments. Alternatively, as shown in FIG. 3b, the conditionally constrained picture may be a human figure contour graph constituted by a line drawing.

In one embodiment of the present disclosure, the conditional constraint information includes: condition information obtained by performing feature extraction on a conditional image; wherein the conditional image includes the original image and/or a reference image corresponding to the original image, a feature extraction method including at least one of the following: edge extraction, keypoint detection, posture detection.

In the embodiment of the present disclosure, the conditionally constrained picture may be obtained by performing feature extraction on the original image and may also be obtained by performing feature extraction on the reference image. The reference image may be a reference image input by the user or an image provided by a platform for selection by the user. The reference image may be understood as an image for reference by the stylization model, so that the target image output by the stylization model has the style of the reference image.

In an embodiment of the present disclosure, the reference image, when input by the user, is obtained in the same manner as the manner of obtaining the original image. Reference may be specifically made the depictions in the above embodiment, and the obtaining manner will not be described in detail any longer.

In one embodiment of the present disclosure, edge extraction refers to a process of extracting from a digital image an edge of an object in the image, and a basic principle of the edge detection is highlighting a local edge in the image by an edge enhancement operator, then defining "an edge strength" of pixels, and extracting an edge point set by setting a threshold. A conditionally constrained picture including the contour graph may be obtained by means of the edge extraction.

In one embodiment of the present disclosure, a basic principle of keypoint detection is seeking for some salient feature points in the image that are not susceptible to an image transformation. A conditionally constrained picture including the keypoints is obtained by means of the keypoint detection. The keypoint detection includes detection of human body keypoints such as joint points of the human body.

In one embodiment of the present disclosure, the posture detection refers to a process of recognizing postures and actions of a human body in a fixed scenario through feature information such as a video image sequence, a human body contour, multiple view angles, etc., and recognizing human body actions according to changes in positions of human body joint points. A conditionally constrained picture including human body postures and actions may be obtained by means of the posture detection.

In one embodiment of the present disclosure, the conditional constraint information may also be a conditionally constrained picture provided and displayed by the system.

In one implementation of the present disclosure, the step of, in response to an operation on the at least one piece of conditional constraint information, generating a target condition feature based on the conditional constraint information corresponding to the operation includes: in response to a selection operation on the conditional constraint information, selecting at least one piece of conditional constraint information from a plurality of pieces of constraint information as target conditional constraint information; for each piece of the target conditional constraint information, in response to a setting operation on control information corresponding to the target conditional constraint information, obtaining target control information corresponding to the target conditional constraint information; generating a target condition feature based on at least one piece of the target conditional constraint information and the target control information corresponding to the target conditional constraint information.

In one embodiment of the present disclosure, at least one conditionally constrained picture is displayed in a terminal interface for selection by the user. In response to the selection operation on the conditionally constrained picture, the selected conditionally constrained picture is taken as a target conditionally constrained picture. In one possible implementation, the conditionally constrained picture as shown in FIG. 3a and the conditionally constrained picture as shown in FIG. 3b are taken as the target conditionally constrained pictures.

In one possible embodiment, the user may select multiple pieces of conditional constraint information simultaneously at one time, or may select multiple pieces of conditional constraint information by performing multiple selection operations in batches. The specific selection manner is not limited in the embodiments of the present disclosure.

In one embodiment of the present disclosure, the generating a target condition feature based on at least one piece of the target conditional constraint information and the target control information corresponding to the target conditional constraint information includes: for each piece of the target conditional constraint information, inputting the target conditional constraint information into a corresponding condition model for feature extraction to obtain an initial condition feature; generating a target condition feature based on the initial condition feature and the target control information.

In one embodiment of the present disclosure, for each target conditionally constrained picture, it is input to the condition model for feature extraction to obtain the initial condition features, wherein the initial condition feature refer to a feature representing the picture in the form of a multi-dimensional feature vector. The feature extraction manner is not specifically limited in the embodiment of the present disclosure.

In one embodiment of the present disclosure, the target control information includes a target condition weight, and the generating a target condition feature based on the initial condition feature and the target control information includes: performing weighting calculation based on at least one the initial condition feature and the target condition weight corresponding to the initial condition feature to obtain the target condition feature.

In one embodiment of the present disclosure, the control information corresponding to the target conditional constraint information may be understood as information on controlling the weight of the target conditional constraint information corresponding thereto in the plurality of pieces of target conditional constraint information. It needs to be appreciated that a sum of the weights corresponding to the plurality of pieces of target conditional constraint information is equal to 1.

In on embodiment of the present disclosure, each piece of target conditional constraint information corresponds to one piece of control information, and the user may set the control information by operating the terminal. The setting operation is mainly used for setting a proportion of the control information in the plurality of pieces of control information.

In one embodiment of the present disclosure, the setting operation may be setting the specific control information by sliding a weight scale bar displayed on the terminal, and taking the set control information as the target control information. The setting operation may also be that the terminal receives a proportional value input by the user and directly uses the proportional value as the target control information.

In one embodiment of the present disclosure, feature extraction is performed on each target conditionally constrained picture to obtain an initial condition feature corresponding thereto, wherein the initial condition feature refers to a feature representing the target conditionally constrained picture in the form of a multi-dimensional vector.

In one embodiments of the present disclosure, any feature extraction method may fall within the scope of the embodiments of the present disclosure, and the feature extraction method is not specifically limited in the embodiments of the present disclosure.

In one embodiment of the present disclosure, when the target control information is the target condition weight, the target condition weight is multiplied by the initial feature vector corresponding thereto to obtain a condition feature corresponding to the target conditionally constrained picture. The target condition feature is obtained by summing the condition features corresponding to a plurality of target conditionally constrained pictures.

In one possible embodiment, the initial condition feature 1 and the initial condition feature 2 are denoted as c1 and c2, respectively, a target condition weight a1 corresponding to the initial condition feature 1, and a target condition weight a2 corresponding to the initial condition feature 2. A weighting calculation is performed to obtain c=a1*c1+(a2)*c2.

In one embodiment of the present disclosure, the target control information includes a target condition mask, and the generating a target condition feature based on the initial condition feature and the target control information includes: generating the target condition feature by applying the target condition mask to act upon at least one the initial condition feature.

In one embodiment of the present disclosure, when the target control information is the target condition mask, the target condition mask is multiplied by the initial feature vector corresponding thereto to obtain a condition feature corresponding to the target conditionally constrained picture. The condition features corresponding to the plurality of target conditionally constrained pictures are summed to obtain the target condition feature.

In one possible implementation, the initial condition feature 1 and the initial condition feature 2 are denoted as c1 and c2, respectively, a target condition mask ml corresponding to the initial condition feature 1, and a target condition mask m2 corresponding to the initial condition feature 2. A weighting calculation is performed to obtain a condition c=ml*cl+(m2)*c2, where ml is a feature vector having the same dimension as cl, and m2 is a feature vector having the same dimension as c2. A position in the target condition mask m2 corresponding to a position in the target condition mask m1 with a feature value of 1 has a feature value of 0. A position in the target condition mask m2 corresponding to a position in the target condition mask m1 with a feature value of 0 has a feature value of 1.

In one embodiment of the present disclosure, a position of a human body region in the target condition mask ml corresponds to a feature value of 1, and a position other than the human body region corresponds to a feature value of 0. Correspondingly, a feature value corresponding to the position of the human body region in the target condition mask m2 is 0, and the feature value corresponding to a position other than the human body region is 1.

In one embodiment of the present disclosure, when the feature value corresponding to the position of the human body region in the target condition mask ml is 1, and the stylization model is controlled, so that the feature about the human body region in the original image is reserved as much as possible in the output target image.

In one embodiment of the present disclosure, the obtaining target control information corresponding to the target conditional constraint information in response to a setting operation on control information corresponding to the target conditional constraint information includes: displaying a plurality of candidate condition masks, and in response to a selection operation on the candidate condition masks, taking a selected candidate condition mask as a target condition mask corresponding to the target conditional constraint information; and/or in response to detecting a sliding operation constituting an enclosed area, performing a mask process on the enclosed area, and then taking the mask-processed enclosed area as the target condition mask corresponding to the target conditional constraint information.

In one possible implementation, the candidate condition masks may be a plurality of mask images pre-set in the system, or the original images, or derived images obtained after processing the conditional images. A plurality of the candidate condition masks are displayed in the terminal interface for selection by the user. Furthermore, in response to the selection operation on the candidate condition mask, the selected candidate conditional mask is taken as the target condition mask.

In one embodiment of the present disclosure, the conditional image is displayed in the terminal interface; in response to the user performing a sliding operation on the conditional image and the sliding operation constituting an enclosed area, the mask process is performed on the enclosed area, and the mask-processed enclosed area is taken as the target condition mask.

S104: A target image is generated based on the target condition feature.

In one implementation of the present disclosure, the generating a target image based on the target condition feature includes: inputting the original image into a target stylization model; inputting the target condition feature as a constraint condition into the target stylization model; generating the target image using the target stylization model.

The target image is determined based on the target condition feature and the original image, the target condition feature is used for constraining the target image information in the target image to have an association with the target image information in the original image, and the target image information refers to image information indicated by the target condition feature.

In one embodiment of the present disclose, the target condition feature is used to constrain the target stylization model to retain as much image information as possible corresponding to the target condition feature during processing of the original image, or to control the image information in the target image as close as possible to the target condition feature.

The embodiment of the present disclosure provides an image stylization processing method, including: obtaining an original image input by a user; displaying at least one piece of conditional constraint information; in response to an operation on the at least one piece of conditional constraint information, generating a target condition feature based on the conditional constraint information corresponding to the operation; generating a target image based on the target condition feature. In the implementation of the present disclosure, by adding the conditional constraint information during the stylization processing of the original image, it is possible to use the conditional constraint information to perform constraint control on the content in the styled images, improve the quality of the styled images, meet the user's demands and improve the user's experience in use.

On the basis of the above embodiment, an embodiment of the present disclosure provides a block diagram of an image stylization process. As shown in FIG. 2, the original image, after being subjected to noise processing, is input into the stylization model. Meanwhile, after edge detection is performed on the original image or the reference image, conditional constraint information 1 is extracted; after posture detection is performed on the original image or the reference image, conditional constraint information 2 is extracted; after keypoint detection is performed on the original image or the reference image, conditional constraint information 3 is extracted; the conditional constraint information 1 is input to a condition model 1 to obtain an initial condition feature 1; the conditional constraint information 2 is input to a condition model 2 to obtain an initial condition feature 2; and the conditional constraint information 3 is input to a condition model 3 to obtain an initial condition feature 3.

Furthermore, control information (condition weights or condition masks) corresponding to all pieces of conditional constraint information may be set. A condition processing module is used to perform weighting calculation on the basis of the initial condition feature 1, the initial condition feature 2, the initial condition feature 3 and the control information corresponding thereto so as to obtain the target condition feature.

Furthermore, the stylization model performs a stylization process on the original image based on the target condition feature to obtain a target image.

On the basis of the above embodiment, an embodiment of the present disclosure provides a specific implementation effect: when the original image is as shown in FIG. 3c, keypoint detection is performed on the original image to obtain the conditional constraint information 1, as shown in FIG. 3a; edge detection is performed on the original image to obtain the conditional constraint information 2, as shown in FIG. 3b. When the condition weight corresponding to the conditional constraint information 1 is 1 and the condition weight corresponding to the conditional constraint information 2 is 0, a generated target image is as shown in FIG. 3d, and includes keypoint information in the original image. When the condition weight corresponding to the conditional constraint information 1 is 0 and the condition weight corresponding to the conditional constraint information 2 is 1, a generated target image is as shown in FIG. 3e, and includes contour information in the original image. When the condition weight corresponding to the conditional constraint information 1 is 0.5 and the condition weight corresponding to the conditional constraint information 2 is 0.5, a generated target image is as shown in FIG. 3e, and the keypoint feature and contour information in the original image are subjected to a mixing process in the target image.

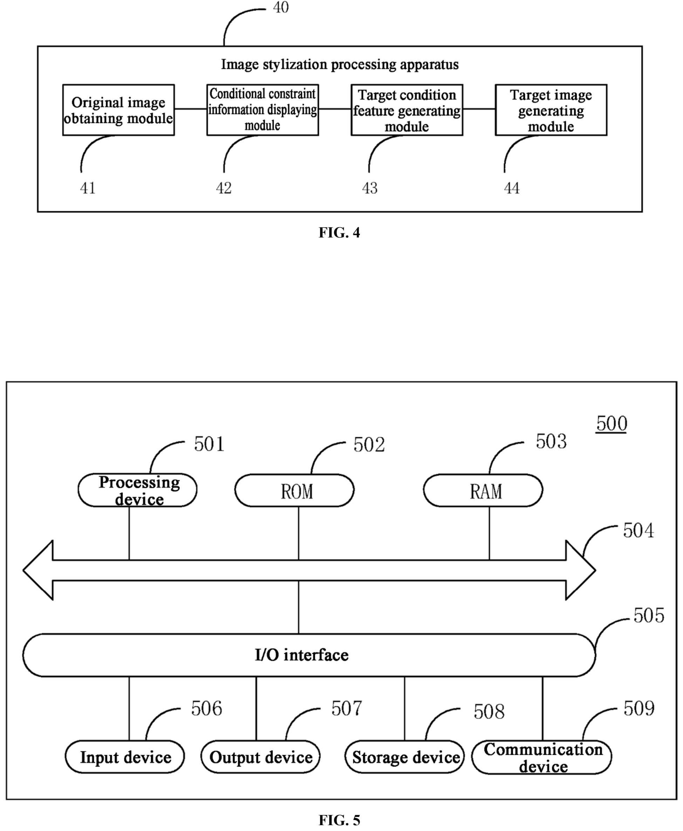

FIG. 4 is a flow chart of an image stylization processing apparatus according to an embodiment of the present disclosure. The embodiment is applicable to a case where stylization processing is performed on an image, and the image stylization processing apparatus can be implemented using software and/or hardware.

As shown in FIG. 4, an image stylization processing apparatus 40 according to an embodiment of the present disclosure includes: an original image obtaining module 41, a conditional constraint information displaying module 42, a target condition feature generating module 43 and a target image generating module 44.

Wherein the original image obtaining module 41 is configured to obtain an original image input by a user;
the conditional constraint information displaying module 42 is configured to display at least one piece of conditional constraint information;
the target condition feature generating module 43 is configured to, in response to an operation on the at least one piece of conditional constraint information, generate a target condition feature based on the conditional constraint information corresponding to the operation;
the target image generating module 44 is configured to generate a target image based on the target condition feature.

In one embodiment of the present disclosure, the target condition feature generating module 43 includes: a target conditional constraint information selecting unit configured to, in response to a selection operation on the conditional constraint information, select at least one piece of conditional constraint information from a plurality of pieces of constraint information as target conditional constraint information; a target control information obtaining unit configured to, for each piece of the target conditional constraint information, in response to a setting operation on control information corresponding to the target conditional constraint information, obtain target control information corresponding to the target conditional constraint information; a target condition feature generating unit configured to generate a target condition feature based on at least one piece of the target conditional constraint information and the target control information corresponding to the target conditional constraint information.

In one embodiment of the present disclosure, the target condition feature generating unit includes: an initial condition feature extracting sub-unit configured to, for each piece of the target conditional constraint information, input the target conditional constraint information into a corresponding condition model for feature extraction to obtain an initial condition feature; a target condition feature generating sub-unit configured to generate a target condition feature based on the initial condition feature and the target control information.

In one embodiment of the present disclosure, the target control information includes a target condition weight, and the target condition feature generating sub-unit is specifically configured to perform weighting calculation based on at least one the initial condition feature and the target condition weight corresponding to the initial condition feature to obtain the target condition feature.

In one embodiment of the present disclosure, the target control information includes a target condition mask, and the target condition feature generating sub-unit is specifically configured to generate the target condition feature by applying the target condition mask to act upon at least one the initial condition feature.

In one embodiment of the present disclosure, the target control information obtaining unit includes: a candidate condition mask displaying sub-unit configured to display a plurality of candidate condition masks; a target condition mask determining sub-unit configured to, in response to a selection operation on the candidate condition masks, take a selected candidate condition mask as a target condition mask corresponding to the target conditional constraint information; and/or in response to detecting a sliding operation constituting an enclosed area, perform a mask process on the enclosed area, and then take the mask-processed enclosed area as a target condition mask corresponding to the target conditional constraint information.

In one embodiment of the present disclosure, the conditional constraint information includes: condition information obtained by performing feature extraction on a conditional image; wherein the conditional image includes the original image and/or a reference image corresponding to the original image, a feature extraction method including at least one of the following: edge extraction, keypoint detection, posture detection.

In one embodiment of the present disclosure, the target image generating module 44 is specifically configured to input the original image into a target stylization model; input the target condition feature as a constraint condition into the target stylization model; generate the target image using the target stylization model.

The image stylization processing apparatus according to the embodiment of the present disclosure may execute the steps in the image stylization processing method according to the method embodiment of the present disclosure, and the execution of the steps and advantageous effects thereof will not be described in detail herein.

FIG. 5 shows a schematic structural diagram of an electronic device according to an embodiment of the present disclosure. Reference is specifically made to FIG. 5 which illustrates a schematic diagram of an electronic device 500 adapted to implement embodiments of the present disclosure. The electronic device 500 in embodiments of the present disclosure may include, but not limited to, mobile terminals such as mobile phones, notebook computers, digital broadcast receivers, Personal Digital Assistants (PDAs), Tablet Computers (Portable Android Devices, PADs), Portable Multimedia Players (PMPs), in-vehicle terminals (e.g., in-vehicle navigation terminals), etc. and fixed terminals such as digital TVs, desktop computers, smart household appliances, etc. The electronic device shown in FIG. 6 is merely an example and should not impose any limitations on the functionality and scope of use of embodiments of the present disclosure.

As shown in FIG. 5, the electronic device 500 may include a processing device (e.g., a central processing unit, a graph processor, etc.) 501 that may perform various suitable acts and processes in accordance with a program stored in a read-only memory (ROM) 502 or a program loaded from a storage device 508 into a random access memory (RAM) 503. In the RAM 503, various programs and data needed by the operation of the electronic device 500 are also stored. The processing device 501, the ROM 502, and the RAM 503 are connected to one another via a bus 504. An input/output (I/O) interface 505 is also coupled to the bus 504.

In general, the following devices may be connected to the I/O interface 505: an input device 506 including, for example, a touch screen, a touch pad, a keyboard, a mouse, a camera, a microphone, an accelerometer, a gyroscope, etc.; an output device 507 including, for example, a Liquid Crystal Display (LCD), a speaker, a vibrator, etc.; a storage device 508 including, for example, a magnetic tape, a hard disk, etc.; and a communication device 509. The communication device 509 may allow the electronic device 500 to communicate in a wireless or wired manner with other devices to exchange data. While FIG. 5 illustrates the electronic device 500 having various devices, it is to be understood that not all illustrated devices are required to be implemented or provided. More or fewer devices may alternatively be implemented or provided.

Especially, according to embodiments of the present disclosure, the processes described above with reference to flow charts may be implemented as computer software programs. For example, embodiments of the present disclosure include a computer program product including a computer program carried on a non-transitory computer-readable medium, the computer program including program code for performing the method illustrated by the flow charts, thereby implementing the above image stylization processing method. In such embodiments, the computer program may be downloaded and installed from a network via the communication device 509, or installed from the storage device 508, or installed from the ROM 502. When the computer program is executed by the processing device 501, the above-described functions defined in the method of the embodiment of the present disclosure are performed.

It is appreciated that the computer-readable medium described above in the present disclosure may be either a computer-readable signal medium or a computer-readable storage medium, or any combination of the two. The computer-readable storage medium may be, for example but not limited to, an electronic, magnetic, optical, electromagnetic, infrared, or semiconductor system, apparatus, or device, or a combination of any of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program that may be used by or in conjunction with an instruction execution system, apparatus, or device. In the present disclosure, the computer-readable signal medium may include a data signal embodied in baseband or propagated as part of a carrier carrying computer-readable program code. Such propagated data signals may take many forms, including but not limited to, electromagnetic signals, optical signals, or any suitable combinations thereof. The computer-readable signal medium may also be any computer-readable medium other than a computer-readable storage medium that may send, propagate, or transport the program for use by or for use in conjunction with the instruction execution system, apparatus, or device. The program code contained on the computer-readable medium may be transmitted with any suitable medium including, but not limited to: electrical wire, optic cable, RF (radio frequency), and the like, or any suitable combinations thereof.

In some embodiments, the client and server may communicate using any currently known or future-developed network protocol, such as HTTP (Hyper Text Transfer Protocol), and may be interconnected with any form or medium of digital data communication (e.g., a communication network). Examples of the communication network include Local Area Networks ("LANs"), Wide Area Networks ("WANs"), the Interne, and peer-to-peer networks (e.g., ad hoc peer-to-peer networks), as well as any currently known or future-developed networks.

The computer readable medium may be contained in the above-described electronic device; it may also be present separately and not installed into the electronic device.

The computer-readable medium carries one or more programs that, when executed by a terminal device, cause the terminal device to: obtain an original image input by a user; display at least one piece of conditional constraint information; in response to an operation on the at least one piece of conditional constraint information, generate a target condition feature based on the conditional constraint information corresponding to the operation; generate a target image based on the target condition feature.

Optionally, the terminal device may perform other steps described in the above embodiments when the one or more programs are executed by the terminal device.

The computer program code for carrying out operations of the present disclosure may be written in one or more programming languages or combinations thereof. The programming languages include, but not limited to, object-oriented programming languages, such as Java, smalltalk, C++, and conventional procedural programming languages, such as the "C" language or similar programming languages. The program code may be executed entirely on the user's computer, executed partly on the user's computer, executed as a stand-alone software package, executed partly on the user's computer and partly on a remote computer, or executed entirely on the remote computer or a server. In the case of the remote computer, the remote computer may be connected to the user's computer through any type of network, including a local area network (LAN) or a wide area network (WAN), or it may be connected to an external computer (e.g., connected through the Internet using an Internet service provider).

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which includes one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, may be implemented by special purpose hardware-based systems that perform the specified functions or operations, or combinations of special-purpose hardware and computer instructions.

The units described in connection with the embodiments disclosed herein may be implemented in a software or hardware manner. The names of the units do not constitute limitations of the units themselves in a certain case.

The functions described herein above may be performed, at least in part, by one or more hardware logic constituent elements. For example, without limitation, exemplary types of hardware logic constituent elements that may be used include: a Field Programmable Gate Array (FPGA), an Application Specific Integrated Circuits (ASIC), an Application Specific Standard Products (ASSP), a Systems On Chip (SOC), a Complex Programmable Logic Device (CPLD), and so on.

In the context of the present disclosure, the machine-readable medium may be a tangible medium that may contain or store a program for use by or for use in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combinations thereof. More specific examples of the machine-readable storage medium would include an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage device, a magnetic storage device, or any suitable combination thereof.

The foregoing description is only illustrative of preferred embodiments of the present disclosure and of the principles of the technology employed. It will be appreciated by those skilled in the art that the scope of the present disclosure is not limited to technical solutions formed by specific combinations of the above technical features, and meanwhile covers other technical solutions formed by any combinations of the above technical features or other equivalent features, for example, technical solutions formed by mutual replacement of the above features and technical features having similar functions disclosed in (not limited to) the present disclosure, without departing from the concept disclosed above.

In addition, while operations are depicted in a particular order, this should not be understood as requiring that such operations are performed in the particular order shown or in sequential order. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Rather, various features described in the context of a single implementation may also be implemented in multiple implementations separately or in any suitable sub-combination.

Although the subject matter has been described in language specific to structural features and/or methodological actions, it should be understood that the subject matters specified in the appended claims are not limited to the specific features or actions described above. Rather, the specific features and actions described above are disclosed as example forms of implementing the claims.

## Claims

1. An image stylization processing method, comprising:
obtaining an original image input by a user;
displaying at least one piece of conditional constraint information;
generating, in response to an operation on the at least one piece of conditional constraint information, a target condition feature based on the conditional constraint information corresponding to the operation; and
generating a target image based on the target condition feature.

2. The method according to claim 1, wherein in response to the operation on the at least one piece of conditional constraint information, generating the target condition feature based on the conditional constraint information corresponding to the operation comprises:
selecting, in response to a selection operation on the conditional constraint information, at least one piece of conditional constraint information from a plurality of pieces of constraint information as target conditional constraint information;
obtaining, in response to a setting operation on control information corresponding to the target conditional constraint information, target control information corresponding to the target conditional constraint information for each piece of the target conditional constraint information; and
generating the target condition feature based on at least one piece of the target conditional constraint information and the target control information corresponding to the target conditional constraint information.

3. The method according to claim 2, wherein generating the target condition feature based on at least one piece of the target conditional constraint information and the target control information corresponding to the target conditional constraint information comprises:
inputting, for each piece of the target conditional constraint information, the target conditional constraint information into a corresponding condition model for feature extraction to obtain an initial condition feature; and
generating the target condition feature based on the initial condition feature and the target control information.

4. The method according to claim 3, wherein the target control information comprises a target condition weight, and
wherein generating the target condition feature based on the initial condition feature and the target control information comprises:
performing weighting calculation based on at least one of the initial condition feature and the target condition weight corresponding to the initial condition feature to obtain the target condition feature.

5. The method according to claim 3, wherein the target control information comprises a target condition mask, and
wherein generating the target condition feature based on the initial condition feature and the target control information comprises:
generating the target condition feature by applying the target condition mask to at least one of the initial condition feature.

6. The method according to claim 5, wherein in response to the setting operation on control information corresponding to the target conditional constraint information, obtaining the target control information corresponding to the target conditional constraint information comprises:
displaying a plurality of candidate condition masks; in response to a selection operation on the candidate condition masks, taking a selected candidate condition mask as a target condition mask corresponding to the target conditional constraint information; and/or
performing, in response to detecting a sliding operation constituting an enclosed area, a mask process on the enclosed area, and then determining the mask-processed enclosed area as a target condition mask corresponding to the target conditional constraint information.

7. The method according to claim 1, wherein the conditional constraint information comprises: condition information obtained by performing feature extraction on a conditional image;
wherein the conditional image comprises the original image and/or a reference image corresponding to the original image, and a feature extraction method comprising at least one of the following: edge extraction, keypoint detection, or posture detection.

8. The method according to claim 1, wherein generating the target image based on the target condition feature comprises:
inputting the original image into a target stylization model;
inputting the target condition feature as a constraint condition into the target stylization model; and
generating the target image using the target stylization model.

9. An image stylization processing apparatus, comprising:
an original image obtaining module configured to obtain an original image input by a user;
a conditional constraint information displaying module configured to display at least one piece of conditional constraint information;
a target condition feature generating module configured to, in response to an operation on the at least one piece of conditional constraint information, generate a target condition feature based on the conditional constraint information corresponding to the operation; and
a target image generating module configured to generate a target image based on the target condition feature.

10. An electronic device, comprising:
one or more processors; and
a storage device for storing one or more programs;
wherein when the one or more programs is executed by the one or more processors, the one or more processors are caused to implement the image stylization processing method according to any of claims 1 to 8.

11. A computer-readable storage medium having a computer program stored thereon, wherein the computer program, when executed by a processor, implements the image stylization processing method according to any of claims 1 to 8.
